(19) Europäisches Patentamt
European Patent Office
Office européen des brevets

(11) **EP 4 400 244 A1**

(12) **EUROPEAN PATENT APPLICATION**
published in accordance with Art. 153(4) EPC

(43) Date of publication:
**17.07.2024 Bulletin 2024/29**

(51) International Patent Classification (IPC):
**B23K 20/12** (2006.01)

(21) Application number: **22867438.8**

(52) Cooperative Patent Classification (CPC):
**B23K 20/12**

(22) Date of filing: **09.09.2022**

(86) International application number:
**PCT/JP2022/033891**

(87) International publication number:
**WO 2023/038117 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.09.2021 JP 2021147249**

(71) Applicants:
- **Kabushiki Kaisha Toshiba**
  **Tokyo 105-0023 (JP)**
- **Toshiba Materials Co., Ltd.**
  **Isogo-Ku**
  **Yokohama-Shi**
  **Kanagawa 235-0032 (JP)**

(72) Inventors:
- **FUKASAWA, Takayuki**
  **Yokohama-shi, Kanagawa 235-0032 (JP)**
- **FUNAKI, Kai**
  **Yokohama-shi, Kanagawa 235-0032 (JP)**
- **ABE, Yutaka**
  **Yokohama-shi, Kanagawa 235-0032 (JP)**
- **HASEGAWA, Koji**
  **Yokohama-shi, Kanagawa 235-0032 (JP)**

(74) Representative: **Henkel & Partner mbB**
**Patentanwaltskanzlei, Rechtsanwaltskanzlei**
**Maximiliansplatz 21**
**80333 München (DE)**

(54) **FRICTION STIR WELDING TOOL MEMBER, FRICTION STIR WELDING DEVICE, AND FRICTION STIR WELDING METHOD**

(57) A friction stir welding tool member including: a shoulder portion; and a probe portion. A helical concavo-convex portion including a ridge and a valley is provided on a side peripheral surface of the probe portion. In a cross-section passing through a rotation axis of the probe portion, a differential rate of areas of valley parts adjacent along an axis parallel to the rotation axis out of the valley is within a range of 5% or more and 30% or less. A difference between pitches of ridge parts adjacent along the axis parallel to the rotation axis out of the ridge is preferably within a range of 0.01 mm or more and 0.2 mm or less. A difference between depths of valley parts adjacent along the axis parallel to the rotation axis out of the valley is preferably within a range of 0.01 mm or more and 0.1 mm or less.

FIG. 1

SIDE VIEW
(A)

TOP VIEW
(B)

EP 4 400 244 A1

**Description**

**TECHNICAL FIELD**

An embodiment described below relates to a friction stir welding tool member, a friction stir welding apparatus, and a friction stir welding method.

**BACKGROUND ART**

Friction stir welding (FSW) is a welding method of integrating a plurality of members by using frictional heat generated by pressing a welding tool member called a probe rotating at high speed, against the members. The friction stir welding can soften the member (base material) by the frictional heat, and cause a periphery of a welding portion to plastically flow by rotational force of the probe, thereby integrating the plurality of members (base material and partner material). Therefore, the friction stir welding is a type of solid-phase welding.

Since the friction stir welding is the solid-phase welding, a heat amount input to the welding portion is small. Therefore, a heat-affected zone is hardly formed, and a degree of softening and distortion of a welding object is small. In addition, cost reduction is expected because the friction stir welding does not use a welding filler metal. The welding tool member used for the friction stir welding is required to have both of abrasion resistance enough to withstand high-speed rotation and heat resistance enough to withstand the frictional heat.

International Publication No. WO 2016/047376 (Patent Document 1) discloses a welding tool member made of a silicon nitride sintered body. In Patent Document 1, the silicon nitride sintered body enhanced in Vickers hardness is used. This improves durability of the welding tool member. On the other hand, further improvement in durability cannot be achieved.

Japanese Patent Laid-Open NO. 2003-25077 (Patent Document 2) discloses a welding tool member including a thread groove structure in a probe portion. In Patent Document 2, in the helical groove, a shape of a metric coarse screw M6 (pitch of 1 mm) based on JIS is provided up to second thread from a rotor side of the probe portion, and a shape of metric fine screw M6 (pitch of 0.75 mm) is provided up to a front end of the probe portion from third thread. In Patent Document 2, the thread groove structure varied in pitch is provided to improve joint efficiency. However, it cannot be said that the durability of the welding tool member itself is sufficient.

**PRIOR ART DOCUMENTS**

**PATENT DOCUMENT**

Patent Document 1: International Publication No. WO 2016/047376
Patent Document 2: Japanese Patent Laid-Open No. 2003-25077

**SUMMARY OF THE INVENTION**

**PROBLEMS TO BE SOLVED BY THE INVENTION**

In a case where the thread groove structure disclosed in Patent Document 2 is provided on the welding tool member made of the silicon nitride sintered body disclosed in Patent Document 1, the durability can be improved to a certain extent; however, further improvement cannot be achieved.

It is found from investigation that this is resulted from a shape of a ridge of the thread groove. In Patent Document 2, the coarse screw is provided up to the second thread, and the fine screw is provided from the third thread. Although the shape of the screw is changed at a part where the screw is switched from the coarse screw to the fine screw, the screw shape is fixed at the other portions. It is found that when the shape of the screw is fixed, improvement of the stirring force is insufficient.

In an existing tool mainly made of a metal material, tips of threads are abraded as the number of times of welding is increased, and the threads disappear at the time of replacement due to expiration of service life. In other words, the threads are reduced by abrasion in use. As a result, the stirring force is gradually lowered, which affects appearance after welding and welding quality.

**MEANS FOR SOLVING THE PROBLEMS**

A friction stir welding tool member according to an embodiment, the friction stir welding tool member including: a shoulder portion; and a probe portion. A helical concavo-convex portion including a ridge and a valley is provided on a side peripheral surface of the probe portion. In a cross-section passing through a rotation axis of the probe portion, a differential rate of areas of valley parts adjacent along an axis parallel to the rotation axis out of the valley is within a range of 5% or more and 30% or less.

**BRIEF DESCRIPTION OF THE DRAWINGS**

FIG. 1 is a diagram illustrating an example of an external shape of a friction stir welding tool member according to an embodiment.
FIG. 2 is a sectional view illustrating an example of a probe portion of the friction stir welding tool member according to the embodiment.
FIG. 3 is a diagram illustrating an example of the friction stir welding method according to the embodiment.
FIG. 4 is a diagram illustrating another example of the external shape of the friction stir welding tool member according to the embodiment.

**DESCRIPTION OF EMBODIMENTS**

A friction stir welding tool member including a shoulder portion and a probe portion according to an embodiment includes a helical concavo-convex portion including a ridge and a valley on a side peripheral surface of the probe portion. In the friction stir welding tool member, in a cross-section passing through a rotation axis of the probe portion, a differential rate of areas of valley parts adjacent along an axis parallel to the rotation axis out of the valley is within a range of 5% or more and 30% or less. Further, in the cross-section passing through the rotation axis of the probe portion, a differential rate of areas of ridge parts adjacent along the axis parallel to the rotation axis out of the ridge is preferably within a range of 5% or more and 30% or less.

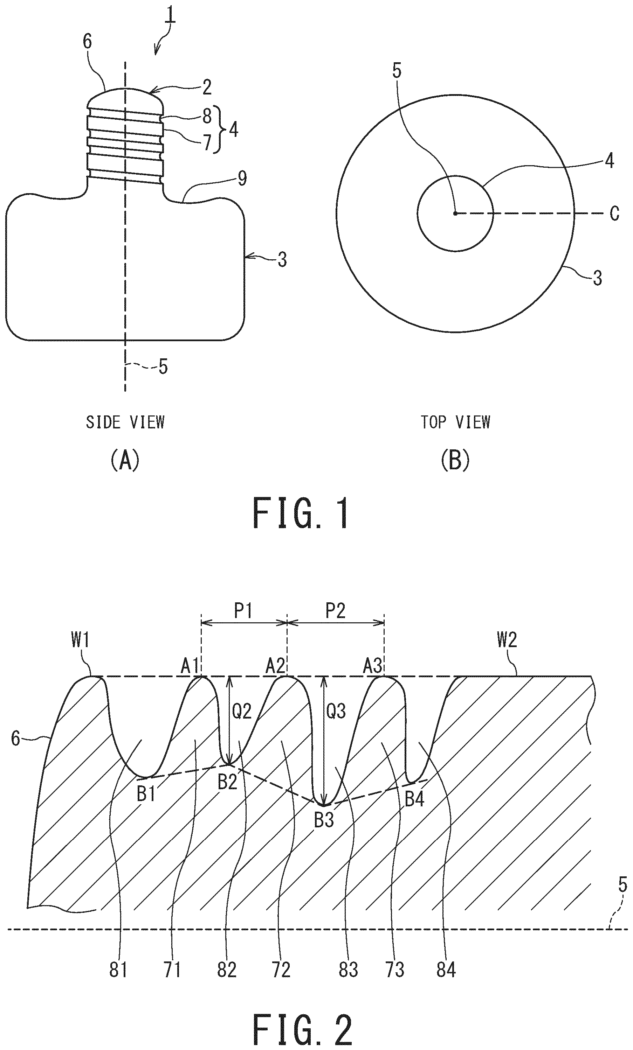

Each of parts (A) and (B) of FIG. 1 is a diagram illustrating an example of an outer shape of the friction stir welding tool member according to the embodiment. A reference numeral 1 denotes the friction stir welding tool member, a reference numeral 2 denotes a probe portion, a reference numeral 3 denotes a shoulder portion, a reference numeral 4 denotes a concavo-convex portion, a reference numeral 5 denotes a rotation axis, a reference numeral 6 denotes a front end surface, a reference numeral 7 denotes a ridge, a reference numeral 8 denotes a valley, and a reference numeral 9 denotes a root part. The friction stir welding tool member 1 mainly includes the probe portion 2 and the shoulder portion 3. The probe portion 2 includes the concavo-convex portion 4 on a side peripheral surface, and the front end surface 6 at a front end part. Further, the concavo-convex portion 4 includes the ridge 7 and the valley 8. On the other hand, the shoulder portion 3 includes the root part 9.

The part (A) of FIG. 1 is a side view of the friction stir welding tool member 1, and the part (B) of FIG. 1 is a top view of the friction stir welding tool member 1. The friction stir welding tool member is also simply referred to as a welding tool member or a tool member in some cases. The welding tool member 1 includes the probe portion 2 at a front end. The probe portion 2 and the shoulder portion 3 may be formed in an integrated type or in a separated type. The integrated type indicates that the probe portion 2 and the shoulder portion 3 are configured as one member and are not detachable from each other. Such a member includes a ceramic sintered body. The separated type indicates a state where the probe portion 2 and the shoulder portion 3 can be separated from each other, namely, a state where the probe portion 2 and the shoulder portion 3 can be detached from each other. In the following, the welding tool member 1 in which the probe portion 2 and the shoulder portion 3 are formed in the integrated type is described as an example. However, the welding tool member 1 may be formed in the separated type.

The welding tool member 1 includes the helical concavo-convex portion 4 including the ridge 7 and the valley 8 on the side peripheral surface of the probe portion 2. A convex portion of the concavo-convex portion 4 is the ridge 7, and a concave portion is the valley 8.

The welding tool member 1 has characteristics that, in a cross-section C passing through a rotation axis of the welding tool member 1, namely, the rotation axis 5 of the probe portion 2, a differential rate of areas of valley parts adjacent along an axis parallel to the rotation axis 5 out of the valley is within a range of 5% or more and 30% or less. For example, a difference between the areas can be measured by a three-dimensional shape measuring machine. The rotation axis 5 is an axis when the welding tool member 1 rotates at high speed. The rotation axis 5 is an axis passing through center of the welding tool member 1, namely, the probe portion 2.

The shape of the concavo-convex portion 4 can be measured by the three-dimensional shape measuring machine. FIG. 2 illustrates an example of the probe portion 2. FIG. 2 is a cross-sectional view of the probe portion 2 in the cross-section C for convenience. In FIG. 2, a reference numeral 71 denotes a first ridge part, a reference numeral 72 denotes a second ridge part, and a reference numeral 73 denotes a third ridge part. Each of the ridge parts 71 to 73 indicates a ridge part appearing in the cross-section C out of the helical ridge 7. A reference numeral 81 denotes a first valley part, a reference numeral 82 denotes a second valley part, a reference numeral 83 denotes a third valley part, and a reference numeral 84 denotes a fourth valley part. Each of the valley parts 81 to 84 indicates a valley part appearing in the cross-section C out of the helical valley 8.

Reference numerals A1, A2, and A3 denote apexes of the ridge parts. More specifically, the reference numeral A1 denotes the apex of the first ridge part 71. The reference numeral A2 denotes the apex of the second ridge part 72. The reference numeral A3 denotes the apex of the third ridge part 73. Reference numerals B1, B2, B3, and B4 denote apexes of the valley parts. More specifically, the reference numeral B1 denotes the apex of the first valley part 81. The reference numeral B2 denotes the apex of the second valley part 82. The reference numeral B3 denotes the apex of the third valley part 83. The reference numeral B4 denotes the apex of the fourth valley part 84. Reference numerals P1 and P2 each denote a pitch between adjacent ridge parts. More specifically, the reference numeral P1 denotes a pitch between the first ridge part 71 and the second ridge part 72. The reference numeral P2 denotes a pitch between the second ridge part 72 and the third ridge part 73. Reference numerals Q2 and Q3 denote depths of the valley parts adjacent to each other. More specifically, the reference numeral Q2 denotes a depth of the second valley part 82, and the reference numeral Q3 denotes a depth of the third valley part 83.

A method of determining an area of each valley part in the cross-section C is described. A method of determining an area of the second valley part 82 is described as an example. The reference numeral A1 denotes the apex of the first ridge part 71, and the reference numeral A2 denotes the apex of the second ridge part 72. The reference numeral B2 denotes the apex of the second valley part 82. The apex of the valley part is the deepest point of the valley part. A straight line is drawn from the apex A1 to the apex A2. A space formed by a cavity in a case where the straight line from the apex A1 to the apex A2 is regarded as an upper side (base) and the straight line is moved to the apex B2 is regarded as the area of the second valley part 82. Likewise, a space formed by a cavity in a case where a straight line from the apex A2 to the apex A3 is regarded as an upper side (base) and the straight line is moved to the apex B3 is regarded as an area of the third valley part 83.

A differential rate (%) of the areas of the valley parts 82 and 83 adjacent along the axis parallel to the rotation axis 5 is calculated from the following expression (1):

$$\text{Differential rate (\%) of areas of valley parts 82 and 83 adjacent along axis parallel to rotation axis 5} = |(\text{area of valley part 82 - area of valley part 83})/\text{area of valley part 82}| \times 100. \tag{1}$$

When the expression is generalized, the differential rate (%) of the areas of the adjacent valley parts is calculated from the following expression (2):

$$\text{Differential rate (\%) of areas of adjacent valley parts} = |(\text{area of m-th valley part - area of m+1-th valley part})/\text{area of m-th valley part}| \times 100, \tag{2}$$

where m is an integer of 1 or more.

The m-th valley part and the m+1-th valley part are valley parts adjacent to each other.

The differential rate of the areas of the adjacent valley parts calculated from the above-described expression (2) is suitably within a range of 5% or more and 30% or less. The differential rate of the areas of the adjacent valley parts within the range of 5% or more and 30% or less means that relationship of the following inequality (3) is satisfied:

$$5\% \leq |(\text{area of m-th valley part - area of m+1-th valley part})/\text{area of m-th valley part}| \times 100 \leq 30\%. \tag{3}$$

When a plurality of valley parts is present, a differential rate of areas of any adjacent two of the valley parts is within the range of 5% or more and 30% or less.

A method of determining an area of each ridge part in the cross-section C is described. A method of determining an area of the second ridge part 72 is described as an example. The reference numeral B2 denotes the apex of the second valley part 82. The reference numeral B3 denotes the apex of the third valley part 83. The apex of the valley part is the deepest point of the valley part. A straight line is drawn from the apex B2 to the apex B3. A space formed by a substance in a case where the straight line from the apex B2 to the apex B3 is regarded as a base and the straight line is moved to the apex A2 is regarded as the area of the second ridge part 72. Likewise, a space formed by a substance in a case where a straight line from the apex B1 to the apex B2 is regarded as a base and the straight line is moved to the apex A1 is regarded as an area of the first ridge part 71. Likewise, a space formed by a substance in a case where a straight line from the apex B3 to the apex B4 is regarded as a base and the straight line is moved to the apex A3 is regarded as an area of the third ridge part 73. As described above, the area of the range having the straight line connecting the apexes of the valley parts as the base is determined. Therefore, a part W1 before the first valley part 81 forming the concavo-convex portion 4 and a part W2 after the last valley part 84 are not counted as ridge parts.

A drawing obtained by the three-dimensional shape measuring machine is used by being enlarged 40 times or more. The areas of the valley parts and the ridge parts may be determined through image analysis using the enlarged drawing. A laser microscope may be used in place of the three-dimensional shape measuring machine.

A differential rate (%) of the areas of the ridge parts 72 and 73 adjacent along the axis parallel to the rotation axis 5 is calculated from the following expression (4):

$$\text{Differential rate (\%) of areas of ridge parts 72 and 73 adjacent along axis parallel to rotation axis 5} = |\text{(area of ridge part 72 - area of ridge part 73) / area of ridge part 72}| \times 100. \qquad (4)$$

When the expression is generalized, the differential rate (%) of the areas of the adjacent ridge parts is calculated from the following expression (5):

$$\text{Differential rate (\%) of areas of ridge parts adjacent along axis parallel to rotation axis 5} = |\text{(area of n-th ridge part - area of n+1-th ridge part) / area of n-th ridge part}| \times 100, \qquad (5)$$

where n is an integer of 1 or more.

The n-th ridge part and the n+1-th ridge part are ridge parts adjacent to each other.

The differential rate of the areas of the adjacent ridge parts calculated from the above-described expression (5) is suitably within a range of 5% or more and 30% or less. The differential rate of the areas of the adjacent ridge parts within the range of 5% or more and 30% or less means that relationship of the following inequality (6) is satisfied:

$$5\% \leq |\text{(area of n-th ridge part - area of n+1-th ridge part) / area of n-th ridge part}| \times 100 \leq 30\%. \qquad (6)$$

When a plurality of ridge parts is present, a differential rate of areas of any adjacent two of the ridge parts is within a range of 5% or more and 30 % or less.

As described above, when the areas of the adjacent valley parts or the adjacent ridge parts in the helical concavo-convex portion 4 are made different, it is possible to improve stirring force of the welding tool member 1. When the differential rate of the areas of the adjacent valley parts or the adjacent ridge parts is less than 5%, an effect by difference of the areas becomes insufficient. When the differential rate of the areas of the adjacent valley parts or the adjacent ridge parts is greater than 30%, durability of the probe portion 2 is deteriorated. Therefore, the differential rate of the areas of the adjacent ridge parts is preferably within the range of 5% or more and 30% or less, and more preferably within a range of 10% or more and 25% or less.

Difference of the areas of the adjacent valley parts out of the helical valley 8 indicates that the adjacent valley parts are different in height, width, shape of an inclined surface, and the like. Likewise, difference of the areas of the adjacent ridge parts out of the helical ridge 7 indicates that the adjacent ridge parts are different in at least one of height, width, shape of an inclined surface, and the like. A tip of each of the ridge parts may have a flat surface or a curved surface in which a rotation center is a peak. To improve stirring force of the welding tool member 1, the tip of each of the ridge parts preferably has a curved surface in which the rotation center is a peak.

In the welding tool member disclosed in Patent Document 2, the coarse screw threads or the fine screw threads have no difference in area. The welding tool member rotates at high speed along the axis parallel to the rotation axis. In the welding tool member 1 according to the present embodiment, the areas of the adjacent ridge parts are made different, which makes it possible to generate unsteady plastic flow. The friction stir welding is a welding method of integrating a plurality of workpieces by using frictional heat generated by pressing the welding tool member rotating at high speed, against the workpieces. The friction stir welding can soften the workpieces by the frictional heat, and cause a periphery of a welding portion to plastically flow by rotational force of the probe portion, thereby integrating the plurality of workpieces. The shapes of the adjacent ridge parts are made different, which makes it possible to generate the unsteady plastic flow. The unsteady plastic flow indicates plastic flow while stress generated by rotation of the probe portion 2 is varied. The unsteady plastic flow can increase the stirring force. Further, the unsteady plastic flow can accelerate increase in temperature at the welding portions of the workpieces. This makes it possible to accelerate softening of the workpieces. Accordingly, it is possible to reduce a load on the welding tool member 1.

In the helical concavo-convex portion 4, the valley 8 is preferably formed of one continuous piece (illustrated in FIG. 1), or a plurality of discontinuous pieces each having a length less than one circumference of the probe portion 2.

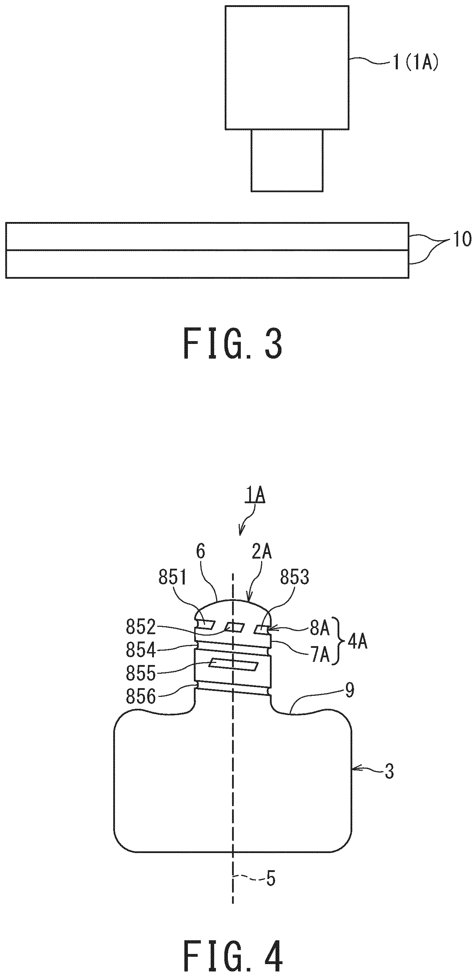

FIG. 4 illustrates a helical concavo-convex portion 4A including discontinuous grooves. In the drawing, a reference numeral 1A denotes a welding tool member, a reference numeral 2A denotes a probe portion, a reference numeral 3 denotes a shoulder portion, a reference numeral 4A denotes the concavo-convex portion, a reference numeral 5 denotes a rotation axis, a reference numeral 6 denotes a front end surface, a reference numeral 7A denotes a ridge, a reference numeral 8A denotes a valley, and a reference numeral 9 denotes a root part. The welding tool member 1A mainly includes the probe portion 2A and the shoulder portion 3. The probe portion 2A includes the concavo-convex portion 4A on a side peripheral surface, and the front end surface 6 at a front end part. Further, the concavo-convex portion 4A includes the ridge 7A and the valley 8A. On the other hand, the shoulder portion 3 includes the root part 9. Reference numerals 851 to 856 denote first to sixth valley parts of the valley 8A formed of the plurality of pieces. FIG. 4 is a schematic view as viewed from a side of the probe portion 2A. In FIG. 4, the members same as the members in the part (A) of FIG. 1 are denoted by the same reference numerals, and description thereof is omitted.

The valley 8A formed of the plurality of pieces includes the plurality of valley parts 851 to 856. Being formed of the plurality of valley parts 851 to 856 indicates a shape in which a side peripheral surface of the probe portion 2A is divided into a plurality of valley parts. For example, from a perspective in FIG. 4, a curved line corresponding to a half circumference is divided into three valley parts, namely, the first to third valley parts 851 to 853. In a case where the valley parts are distributed with short intervals, similar effects can be achieved even though the valley is not formed of one piece.

In a case where a length of each valley part of the valley 8A formed of the plurality of pieces is less than one circumference of the probe portion 2A, the valley part having a length less than one circumference of the probe portion may be formed of one piece or may be divided into a plurality of pieces. The valley formed of one piece having the length less than one circumference leads to improvement in stirring force of the welding tool member 1A. In contrast, the valley formed of the plurality of pieces leads to improvement in strength of the probe portion 2A.

The valley 8A may include the valley part having the length greater than or equal to one circumference and the valley part having the length less than one circumference in combination. For example, out of the valley 8A, a valley part near a root of the probe portion 2A may be formed to have a length less than one circumference, and other valley parts each may be formed to have a length greater than or equal to one circumference. This makes it possible to improve both of the strength of the probe portion 2A and the stirring force of the welding tool member 1A.

From the perspective in FIG. 4, each of the fourth valley part 854 and the sixth valley part 856 is formed of one piece; however, when a valley part is present on a rear side of one circumference of the probe portion 2A, each of the fourth valley part 854 and the sixth valley part 856 is divided into a plurality of pieces. Therefore, it is sufficient for each of the plurality of valley parts 851 to 856 of the valley 8A to be present on the same curved line in one circumference of the probe portion 2A.

When the valley 8A includes the plurality of valley parts 851 to 856, the fourth valley part 854 is preferably present just below (adjacent to) a gap between the first valley part 851 and the second valley part 852 and a gap between the second valley part 852 and the third valley part 853. As illustrated in FIG. 4, when the fourth valley part 854 is present just below the gaps, it is possible to prevent the stirring force of the welding tool member 1A from being deteriorated.

For example, when the valley parts each having a length corresponding to half circumference of the probe portion 2A are arranged vertically (along axis parallel to rotation axis 5), the number of parts not provided with the valley part is increased, and the stirring force of the welding tool member 1A may be accordingly lowered. Therefore, the gap on the curved line provided with the plurality of valley parts of the valley 8A, for example, the gap between the first valley part 851 and the second valley part 852 is preferably 2 mm or less, and more preferably 0.5 mm or less. An example in which the gap on the curved line provided with the plurality of valley parts of the valley 8A is 2 mm or less is illustrated.

In the cross-section passing through the rotation axis 5 of the welding tool member 1 or 1A, a pitch between the ridge parts adjacent along the axis parallel to the rotation axis 5 is preferably within a range of 0.1 mm or more and 0.2 mm or less. The pitch between the adjacent ridge parts indicates an interval between the apexes of the adjacent ridge parts in the cross-section C. The apex of the ridge part indicates the highest position of one ridge part (for example, each of ridge parts 71 to 73 in FIG. 2). In FIG. 2, the first ridge part 71 has the apex A1, the second ridge part 72 has the apex A2, and the third ridge part 73 has the apex A3. A pitch between the first ridge part 71 and the second ridge part 72 is denoted by P1. A pitch between the second ridge part 72 and the third ridge part 73 is denoted by P2. The pitch is determined from an interval between perpendicular lines drawn from the respective apexes.

A difference between the pitches of the ridge parts adjacent along the axis parallel to the rotation axis 5 can be calculated from the following expression (7):

Difference between pitches of ridge parts adjacent along axis parallel to rotation axis 5 = |P1 - P2|.     (7)

The difference between the pitches of the ridge parts adjacent along the axis parallel to the rotation axis 5 within a range of 0.01 mm or more and 0.2 mm or less indicates that the following inequality (8) is satisfied:

$$0.01 \text{ mm} \leq |P1 - P2| \leq 0.2 \text{ mm}. \quad (8)$$

Any of the pitch P1 and the pith P2 may be greater than another. This indicates that any of the adjacent pitches may be greater than another. Further, when a plurality of pitches is present, a difference between any adjacent two of the pitches of the ridge parts is preferably within the range of 0.01 mm or more and 0.2 mm or less.

When the difference between the pitches is within the range of 0.01 mm or more and 0.2 mm or less, the stirring force of the welding tool members 1 and 1A can be improved. The pitches are made different, which makes it possible to easily generate the unsteady plastic flow. When the difference between the pitches is less than 0.01 mm, the gaps become excessively uniform, which may make it difficult to generate the unsteady plastic flow. When the difference between the pitches is greater than 0.2 mm, the stirring force of the welding tool members 1 and 1A may be deteriorated. Therefore, the difference between the adjacent pitches of the ridge parts is preferably within the range of 0.01 mm or more and 0.2 mm or less, and more preferably within a range of 0.01 mm or more and 0.1 mm or less.

In the cross-section passing through the rotation axis 5 of the welding tool member 1, a difference between depths of the valley parts adjacent along the axis parallel to the rotation axis 5 is preferably within a range of 0.01 mm or more and 0.1 mm or less, and more preferably within a range of 0.01 mm or more and 0.05 mm or less. The valley parts of the valley 8 are each formed between the adjacent ridge parts of the ridge 7. As illustrated in FIG. 2, a valley part between the first ridge part 71 and the second ridge part 72 is the second valley part 82. A valley part between the second ridge part 72 and the third ridge part 73 is the third valley part 83. The matters described in relation to the welding tool member 1 are also applicable to the welding tool member 1A.

A method of determining the depth of each valley part is described using the second valley part 82 as an example with reference to FIG. 2. A straight line connecting the apex A1 of the first ridge part 71 and the apex A2 of the second ridge part 72 is drawn. A line perpendicular to the rotation axis 5 is drawn from the apex B2 of the second valley part 82. A contact point between the perpendicular line from the apex B2 and the straight line connecting the apex A1 and the apex A2 is determined. A distance from the apex B2 to the contact point is regarded as a depth Q2 of the second valley part 82.

A depth Q3 of the third valley part 83 is determined in a similar manner. A straight line connecting the apex A2 of the second ridge part 72 and the apex A3 of the third ridge part 73 is drawn. A contact point between a perpendicular line from the apex B3 of the third valley part 83 and the straight line connecting the apex A2 and the apex A3 is determined. A distance from the apex B3 to the contact point is regarded as the depth Q3 of the third valley part 83.

A difference between the depths of the valley parts adjacent along the axis parallel to the rotation axis 5 can be determined from the following expression (9):

Difference between depths of valley parts adjacent along axis parallel to rotation axis 5 = |Q1 - Q2|. (9)

The difference between the depths of the adjacent valley parts within the range of 0.01 mm or more and 0.1 mm or less indicates that the following inequality (10) is satisfied:

$$0.01 \text{ mm} \leq |Q1 - Q2| \leq 0.1 \text{ mm}. \quad (10)$$

Any of the depth Q1 and the depth Q2 may be greater than another. This indicates that any of the depths of the adjacent valley parts may be greater than another. Further, when a plurality of valley parts is present along the axis parallel to the rotation axis 5, a difference between the depths of any adjacent two of the valley parts is preferably within the range of 0.01 mm or more and 0.1 mm or less.

The depths of the adjacent valley parts are made different, which makes it possible to generate the unsteady plastic flow. When the difference between the depths of the adjacent valley parts is less than 0.01 mm, stress generating the unsteady plastic flow may become insufficient. When the difference between the depths of the adjacent valley parts exceeds 0.1 mm, stress may concentrate on a higher one of the ridge parts, and durability may be deteriorated. The difference between the depths of the adjacent valley parts is more preferably within a range of 0.01 mm or more and 0.05 mm or less.

The shoulder portion 3 connected to the probe portion 2 or 2A preferably has an inclined surface inclined from the root part 9 to an outer edge of the shoulder portion 3. Inclination of the inclined surface is preferably within a range of 3 degrees or more and 20 degrees or less, and more preferably within a range of 5 degrees or more and 15 degrees or less. The inclination of the inclined surface is an angle formed by a horizontal line from the root part 9 and a straight line drawn from the root part 9 to an apex of the shoulder portion 3. The positive inclination of the inclined surface indicates that the apex of the shoulder portion 3 is at a position higher than the root part 9. The apex of the shoulder portion 3 is the highest point of the shoulder portion 3.

The inclined surface is preferably a recessed surface. The recessed surface indicates that the surface is warped in an arc shape in a cross-section of the shoulder portion.

An outer diameter of each of the probe portions 2 and 2A preferably satisfies the following inequality (11) relative to an outer diameter of the shoulder portion 3:

$$0.2 \times \text{outer diameter of shoulder portion} \leq \text{outer diameter of probe portion} \leq 0.7 \times \text{outer diameter of shoulder portion.} \tag{11}$$

The welding tool member 1 according to the embodiment includes the helical concavo-convex portion 4 in the probe portion 2. As described above, the areas of the adjacent ridge parts are made different to improve the stirring force. The outer diameter of the probe portion 2 is made within a range of 0.2 times or more and 0.7 times or less of the outer diameter of the shoulder portion, which makes it possible to impart the stirring force by the shoulder portion 3 to the stirring force by the probe portion 2. The matters described in relation to the welding tool member 1 are also applicable to the welding tool member 1A.

The root part 9 of the probe portion 2 of the welding tool member 1 preferably has a curved surface shape with a radius of curvature of 0.1 mm or more. When the root part 9 has the curved surface shape, stress applied to the probe portion 2 can be relaxed. In other words, the concavo-convex portion 4 is preferably not provided up to the root part 9. Therefore, the radius of curvature of the root part 9 is preferably 0.1 mm or more, and more preferably 0.2 mm or more. The matters described in relation to the welding tool member 1 are also applicable to the welding tool member 1A.

An outer edge part of the shoulder portion 3 of each of the welding tool member 1 and 1A preferably has a radius of curvature of 0.3 mm or more, and more preferably has a radius of curvature of 0.5 mm or more. When the outer edge part of the shoulder portion 3 has a predetermined radius of curvature, it is possible to improve durability of the shoulder portion 3.

A tip of the ridge 7 of the concavo-convex portion 4 of the welding tool member 1 is preferably rounded. This makes it possible to improve durability of the ridge 7. When the tip of the ridge 7 is sharp, durability of the ridge 7 may be deteriorated. To round the tip of the ridge 7, sanding with sandpaper or the like is effective. The matters described in relation to the welding tool member 1 are also applicable to the welding tool member 1A.

The radius of curvature is measured by the three-dimensional shape measurement machine while the probe portion 2 of the welding tool member 1 is directed upward, and an obtained image is used. The measurement condition of the three-dimensional shape measurement machine is as described above. The radius of curvature of the root part 9 is a value when the root part 9 is viewed from outside. The radius of curvature of the outer edge part of the shoulder portion 3 is a value when the outer edge part is viewed from inside. The tip of the ridge 7 is observed using the image enlarged 40 times. The matters described in relation to the welding tool member 1 are also applicable to the welding tool member 1A.

The front end surface 6 of the probe portion 2 of the welding tool member 1 preferably has a curved surface shape. A surface roughness Ra of the front end surface 6 of the probe portion 2 is preferably within a range of 0.2 μm or more and 15 μm or less. The front end surface 6 of the probe portion 2 is a portion pressed against the workpieces. When the front end surface 6 is formed in the curved surface shape as illustrated in FIG. 1, the welding tool member 1 easily intrudes into the workpieces. The curved surface is a shape having an arc-shaped cross-section. The matters described in relation to the welding tool member 1 are also applicable to the welding tool member 1A.

When the surface roughness Ra of the front end surface 6 of each of the welding tool members 1 and 1A is within the range of 0.2 μm or more and 15 μm or less, each of the welding tool members 1 and 1A easily intrudes into the workpieces. Therefore, the front end surface 6 preferably has the curved surface shape, and the surface roughness Ra thereof is preferably within the range of 0.2 μm or more and 15 μm or less. When the surface roughness Ra is less than 0.2 μm, the stirring force may become insufficient because the surface is excessively flat. Slippage occurs to the workpieces, thereby resulting in an idle state. Therefore, temperatures of the workpieces are not increased, and a load on the tool is increased. This may reduce a service life of the tool. In contrast, when the surface roughness Ra is greater than 15 μm, the stirring force is improved, but strength of the front end surface 6 may become insufficient. Surface roughness Ra of the shoulder portion 3 is also preferably within the range of 0.2 μm or more and 15 μm or less.

The surface roughness Ra is determined based on JIS B 0601:2001. The surface roughness is measured using a stylus surface roughness meter or a non-contact surface roughness meter using a laser microscope.

The outer diameter and the length of each of the probe portion 2 and the shoulder portion 3 of the welding tool member 1 may be changed based on materials and thicknesses of the workpieces. The length of the probe portion 2 is preferably greater than a thickness of one workpiece. In addition, the length of the probe portion 2 is preferably substantially equal to thicknesses of the workpieces to be welded, and is preferably shorter by about 0.2 mm than the thicknesses of the workpieces to be welded so as not to come into contact with a backing material. The matters described in relation to the welding tool member 1 are also applicable to the welding tool member 1A.

A ratio of the outer diameter of the probe portion 2 and the outer diameter of the shoulder portion 3 of the welding tool member 1 preferably satisfies the following inequality (12) :

$$0.1 \leq \text{outer diameter of probe portion 2/outer diameter oh shoulder portion 3} \leq 0.6. \tag{12}$$

When the ratio of the outer diameter of the probe portion 2 and the outer diameter of the shoulder portion 3 is less than 0.1, the probe portion 2 is small, and the stirring force may become insufficient. In contrast, when the ratio exceeds 0.6, the effect derived from the shoulder portion 3 may be lowered. The matters described in relation to the welding tool member 1 are also applicable to the welding tool member 1A.

A ratio of the depth of the valley 8 and the outer diameter of the probe portion 2 of the welding tool member 1 preferably satisfies the following inequality (13):

$$0.02 \leq \text{depth of valley 8/ outer diameter of probe portion 2} \leq 0.2. \tag{13}$$

When the ratio of the depth of the valley 8 and the outer diameter of the probe portion 2 is less than 0.02, the effect derived from the concavo-convex portion 4 may be lowered. In contrast, when the ratio of the depth of the valley 8 and the outer diameter of the probe portion 2 exceeds 0.2, the strength of the probe portion 2 may be deteriorated because the groove is deep. The matters described in relation to the welding tool member 1 are also applicable to the welding tool member 1A.

In spot welding as described below, a plurality of plate-like workpieces is superimposed and welded. The length of the probe portion 2 of the welding tool member 1 is preferably made shorter than a total thickness of the superimposed workpieces. Further, the length of the probe portion 2 is preferably shorter by about 0.2 mm than the total thickness of the superimposed workpieces. This makes it possible to prevent the probe portion 2 from coming into contact with the backing material. Further, about 0.2 mm indicates 0.2 mm $\pm$ 0.1 mm. The matters described in relation to the welding tool member 1 are also applicable to the welding tool member 1A.

The length of the probe portion 2 of the welding tool member 1 indicates a length of the probe portion 2 protruding from a horizontal line drawn at the highest position of the shoulder portion 3. The horizontal line is drawn at the highest position of the shoulder portion 3 while the probe portion 2 is directed upward. When the length of the probe portion 2 is made shorter than the total thickness of the superimposed workpieces, the probe portion 2 does not protrude to a rear side of the workpieces. This makes it possible to prevent the probe portion 2 from coming into contact with the backing material. The matters described in relation to the welding tool member 1 are also applicable to the welding tool member 1A.

A material of the welding tool members 1 and 1A is preferably a material having high strength and heat resistance. Examples of the material of the welding tool member 1 include a silicon nitride sintered body, a cubic boron nitride sintered body (PCBN), an iridium alloy, and a WC hard metal alloy.

Among them, the silicon nitride sintered body most excellent in abrasion resistance is preferably used. The silicon nitride sintered body has a Vickers hardness Hv of 1400 or more. The helical concavo-convex portions 4 and 4A are formed by cutting using a diamond wheel. An NC machine tool and the like are used for cutting. Since the silicon nitride sintered body is a hard material, a cutting amount possible at one time is small. In other words, the silicon nitride sintered body can be cut by little and little. This makes it possible to control an area ratio of each of the ridges 7 and 7A and the like. The Vickers hardness is obtained by measuring HV20 (test force 196.1 N) based on JIS R 1610:2003. Note that JIS R 1610 corresponds to ISO 14705.

In addition, a fracture toughness value of the silicon nitride sintered body can be made high, for example, 5.5 MPa·m$^{1/2}$ or more. This makes it possible to improve durability of the welding tool members 1 and 1A. The fracture toughness value is determined from a Niihara equation by using an IF method based on JIS R 1607:2015. Note that JIS R 1607 corresponds to ISO 15732.

According to the welding tool members 1 and 1A respectively including the helical concavo-convex portions 4 and 4A as described above, it is possible to improve the stirring force. In addition, since the unsteady plastic flow can be generated, it is possible to accelerate increase in temperature at the welding portions of the workpieces. This makes it possible to reduce a time for each welding operation. As a result, durability of the welding tool members 1 and 1A can be improved.

In addition, when the welding tool members 1 and 1A are made of the silicon nitride sintered body, it is possible to further improve abrasion resistance. In other words, when the welding tool member 1 and 1A respectively including the predetermined concavo-convex portions 4 and 4A are made of the silicon nitride sintered body, it is possible to improve both of the stirring force and the durability.

Next, a friction stir welding apparatus and a friction stir welding method using the friction stir welding tool member according to the embodiment are described.

FIG. 3 illustrates an example of the friction stir welding method. In the drawing, a reference numeral 1 (1A) denotes the welding tool member, and a reference numeral 10 denotes a workpiece. In FIG. 3, a case where two workpieces 10 are superimposed on each other is illustrated; however, the friction stir welding method according to the embodiment is not limited thereto. Three or more workpieces 10 may be superimposed on each other. The workpieces 10 may be partially superimposed on each other, and the friction stir welding may be performed on superimposed portions. Further alternatively, the workpieces 10 may be abutted on each other, and the friction stir welding may be performed on abutted portions.

The friction stir welding apparatus includes the welding tool member 1 (or welding tool member 1A) according to the embodiment. The welding tool member 1 is pressed against the workpieces 10 while rotating at high speed. The welding tool member 1 is pressed against the workpieces 10 from the probe portion 2. The plastic flow is generated in the workpieces 10, and the welding tool member 1 intrudes into the workpieces 10 up to the shoulder portion 3. Each of the workpieces 10 is not limited to a plate shape. In a case where the friction stir welding method is performed, an unillustrated backing member may be used. The backing member is a member used as a bottom board for the workpieces 10. A member having low heat conductivity is preferably used for the backing member. This makes it possible to suppress dissipation of the generated heat, and to effectively transfer the generated heat to the workpieces. Therefore, the heat conductivity of the backing member is preferably 30 W/m·K or less.

The friction stir welding method is applicable to spot welding and linear welding. The spot welding is a method in which the welding tool member 1 is pressed against the workpieces 10, and the workpieces 10 are welded by pressing-in of the welding tool member 1. The linear welding is a method in which the welding tool member 1 is pressed against the workpieces 10, and the workpieces 10 are welded while the welding tool member is pushed in and moved. In the spot welding, a welding mark is formed in a spot shape, whereas in the linear welding, a welding mark is formed in a linear shape.

In the case where the friction stir welding method is performed, the welding tool member 1 may be pressed against the workpieces 10 while being inclined. An inclination angle of the welding tool member 1 is referred to as an advance angle. The advance angle when the welding tool member 1 is perpendicular to the workpieces 10 is defined as zero degrees. The advance angle when the welding tool member 1 is inclined by five degrees from the perpendicular direction is five degrees. The advance angle is determined by inclination of the rotation axis 5. The advance angle in a case where the welding tool member 1 is inclined toward a direction in which the probe portion 2 protrudes relative to a moving direction of the welding tool member 1 is defined as a positive advance angle.

In the case of the spot welding, the advance angle is preferably zero degrees. In the case of the linear welding, the advance angle is preferably within a range of one degree or more and 20 degrees or less.

The thickness of each of the workpieces 10 is suitably 0.1 mm or more. The thickness of each of the workpieces 10 is further preferably within a range of 0.5 mm or more and 20 mm or less. The thickness of each of the workpieces 10 indicates a thickness of one workpiece 10.

Various materials can be adopted as the workpieces 10. The material of the workpieces 10 is preferably one kind or two or more kinds selected from iron, an iron alloy, aluminum, an aluminum alloy, magnesium, a magnesium alloy, copper, a copper alloy, and a fiber-reinforced composite resin such as CFRP (carbon fiber reinforced plastics). In a case where two or more workpieces 10 are welded, the workpieces 10 may be made of the same material or different materials. For example, aluminum alloy plates may be welded, or an aluminum alloy plate and a magnesium alloy plate may be welded.

Examples of the iron alloy include carbon steel, tool steel, chromium-molybdenum steel, stainless steel, manganese steel, and cast steel.

The iron alloy has a Vickers hardness Hv of 140 or more. The Vickers hardness Hv of aluminum is about 25. The Vickers hardness Hv of a magnesium alloy is about 60. The Vickers hardness Hv of a copper alloy is about 30. When the welding tool member 1 is made of the silicon nitride sintered body, the welding tool member 1 can be applied to soft aluminum and hard iron. In particular, in the case of using the welding tool member 1, the material of the workpieces 10 is preferably one kind selected from aluminum, an aluminum alloy, magnesium, a magnesium alloy, copper, and a copper alloy. In the welding tool member 1 according to the embodiment, the concavo-convex portion 4 is provided to improve the stirring force. The Vickers hardness Hv of each of aluminum, an aluminum alloy, magnesium, a magnesium alloy, copper, a copper alloy, and a fiber-reinforced composite resin is 80 or less. Stirring is easily performable when hardness of the workpieces 10 is low. In other words, the welding tool member 1 is suitable for the workpieces each having the Vickers hardness Hv of 80 or less.

In a case where the workpieces each having the Vickers hardness Hv of 140 or more are used, the workpieces are preferably made thin. In a case where the workpieces are thin, the workpieces can be welded at a welding temperature within a range of 300°C or more and 600°C or less in the friction stir welding. As compared with a case where the concavo-convex portion 4 is not provided, durability is deteriorated when the concavo-convex portion 4 is provided. When the welding temperature is set to the range of 300°C or more and 600°C or less, excellent durability is exerted even though the workpieces each having the Vickers hardness Hv of 140 or more are welded.

A rotation speed of the welding tool member 1 is preferably 200 rpm or more, and a pushing load of the welding tool member 1 is preferably 1 kN or more. In a case where the linear welding is performed, a moving speed is preferably set to 300 mm/minute or more. The rotation speed of the welding tool member 1 is preferably within a range of 200 rpm or more and 5000 rpm or less. When the rotation speed is less than 200 rpm, heating and the stirring force may become insufficient. When the rotation speed exceeds 5000 rpm, the stirring force becomes excessive, and irregularity of the welding mark on the workpieces 10 is increased. When the irregularity of the welding mark is increased, appearance of the welding portion is deteriorated. Therefore, the rotation speed of the welding tool member 1 is preferably within the range of 200 rpm or more and 5000 rpm or less, and more preferably within a range of 1000 rpm or more and 4000 rpm or less.

When the pushing load is less than 1 kN, pushing force may become insufficient, and the stirring force may be lowered. Lowering of the stirring force increases the welding time, and deteriorates manufacturing efficiency. Although an upper limit of the pushing load is not particularly limited, the pushing load is preferably 20 kN or less. When the pushing load exceeds 20 kN, a service life of the welding tool member 1 may be lowered. Therefore, the pushing load is preferably within a range of 1 kN or more and 20 kN or less, and more preferably within a range of 2 kN or more and 15 kN or less.

The rotation speed and the pushing load described above of the welding tool member 1 can be applied to any of the spot welding and the linear welding. In the case where the linear welding is performed, the moving speed is preferably within a range of 300 mm/minute or more and 1500 mm/minute or less. When the moving speed is less than 300 mm/minute, the speed is excessively low and productivity is lowered. This also causes increase in welding temperature more than necessary. In contrast, when the moving speed exceeds 1500 mm/minute, the temperature is not partially increased, and the stirring force is reduced. This increases a load on the tool, and leads to concern about influence on the service life. In addition, welding strength of the workpieces is deteriorated. Therefore, the moving speed is preferably within the range of 300 mm/minute or more and 1500 mm/minute or less, and more preferably within a range of 400 mm/minute or more and 1000 mm/minute or less.

The friction stir welding method according to the embodiment is preferably used for spot welding. As described above, the friction stir welding according to the embodiment can be applied to any of the spot welding and the linear welding. On the other hand, the welding tool member 1 according to the embodiment includes the helical concavo-convex portion 4 in the probe portion 2. This makes it possible to generate the unsteady plastic flow. The spot welding is often performed at the advance angle of zero degrees. The advance angle of zero degrees indicates a direction perpendicular to the workpieces 10. When the probe portion 2 is pressed against the workpieces 10 at the advance angle of zero degrees, the probe portion 2 easily intrudes into inside of the workpieces 10 by a drill effect of the helical concavo-convex portion 4. This makes it possible to accelerate plastic flow of the welding portion. In the case of the spot welding, the drill effect of the helical concavo-convex portion 4 is easily obtained. In addition, the drill effect can be obtained as the rotation speed is increased. Therefore, the spot welding is preferable.

According to the above-described friction stir welding method, it is possible to realize both of high stirring force and durability of the welding tool members 1 and 1A. In addition, when the workpieces each having the Vickers hardness Hv of 80 or less are spot-welded using the welding tool member 1 or 1A made of the silicon nitride sintered body, an abrasion amount of the tool member 1 can be made zero even after the spot welding at 5000 points.

A method of manufacturing the welding tool member 1 (or welding tool member 1A) according to the embodiment is described. The method of manufacturing the welding tool member 1 according to the embodiment is not particularly limited as long as the welding tool member 1 has the above-described configuration; however, a method of manufacturing the welding tool member 1 with high yield is as follows.

In the following, the method of manufacturing the welding tool member 1 by using the silicon nitride sintered body is exemplified.

First, the silicon nitride sintered body is prepared. The silicon nitride sintered body preferably has the Vickers hardness HV20 of 1400 or more. Further, the silicon nitride sintered body preferably has the fracture toughness value of 5.5 MPa·m$^{1/2}$ or more.

Thereafter, cutting work is performed on the silicon nitride sintered body. The cutting work is suitably performed by the NC machine tool. The NC machine tool is an apparatus including a general-purpose lathe and a numerical control apparatus in combination. The NC machine tool can perform automatic machining using machining programs. When sizes such as the areas of the ridge parts, the pitches, and the depths of the valley parts are programmed, target concavo-convex portions 4 and 4A can be obtained. When one grinding wheel is used in the machining by the NC machine tool, the concavo-convex portions 4 and 4A can be easily machined. When the silicon nitride sintered body is formed in a columnar shape, the concavo-convex portions 4 and 4A can be easily machined. When the concavo-convex portion 4 or 4A is formed on the columnar silicon nitride sintered body, shape control of the concavo-convex portions 4 and 4A can lead to shape control of the ridge.

In addition, to control the surface roughness of the front end surface of the probe portion and the shoulder portion, polishing is preferably performed. To control the surface roughness, polishing using a diamond wheel is suitable.

(Examples)

(Examples 1 to 11 and Comparative Examples 1 to 3)

A friction stir welding tool member made of the silicon nitride sintered body was fabricated. The friction stir welding tool member included the probe portion and the shoulder portion that were integrated. The silicon nitride sintered body having the Vickers hardness HV20 and the fracture toughness value illustrated in Table 1 was used.

[Table 1]

|  | Vickers hardness (HV20) | Fracture toughness Value (MPa · m$^{1/2}$) |
| --- | --- | --- |
| Silicon Nitride Sintered Body 1 | 1450 | 5.7 |
| Silicon Nitride Sintered Body 2 | 1550 | 6.3 |

The helical concavo-convex portion was formed in the probe portion of the silicon nitride sintered body by machining by the NC machine tool. The inclination angle of the inclined surface inclined from the root part 9 of the probe portion 2 to the outer edge of the shoulder portion was set to 15 degrees. Next, polishing was performed on the front end surface 6 of the probe portion 2 and the shoulder portion 3 to control the surface roughness Ra. The surface roughness Ra of the shoulder portion was within the range of 0.2 $\mu$m or more and 15 $\mu$m or less. The shape of the obtained friction stir welding tool member was illustrated in Table 2 and Table 3. The shape of the concavo-convex portion was measured from the direction perpendicular to the rotation axis by the three-dimensional shape measuring machine. The measurement method is as described above.

In the comparative example 1, the concavo-convex portion was not formed. In the comparative example 2, the differential rate of the areas of the ridge parts adjacent along the axis parallel to the rotation axis 5 was set to 1% or less. In the comparative example 3, a portion where the differential rate of the areas of the ridge parts adjacent along the axis parallel to the rotation axis X was 40% was included.

In the examples 1 to 11 and the comparative examples 2 and 3, an inequality of 0.02 ≤ depth of valley/outer diameter of probe portion ≤ 0.2 was satisfied. In the examples 1 and 3 to 11, and the comparative examples 2 and 3, the tip of the ridge was formed in a rounded shape (curved surface shape). In the examples 1 to 6 and 11, and the comparative examples 2 and 3, the valley formed of one piece was provided in the helical concavo-convex portion. In the examples 7 and 8, the valley formed of the plurality of pieces with gaps (corresponding to valley 8A in FIG. 4) was formed in the concave-convex portion. In the example 7, the gap formed on the curved line corresponding to the half circumference was set to 0.1 mm. In the example 7, three valley parts were provided on the curved line corresponding to one circumference. In the example 8, the gap formed on the curved line corresponding to the half circumference was set to 0.2 mm. In the example 8, two valley parts were provided on the curved line corresponding to one circumference. In the example 9, one valley part having a length less than one circumference (90% of one circumference) was provided. In the example 10, one valley part having a length less than one circumference (90% of one circumference) was provided near the root of the probe portion. In the example 10, the gap formed on the curved line for the valley parts other than the valley part near the root of the probe portion 2 was set to 0.1 mm. In the examples 7 to 10, the valley part was present just below the formed gap.

[Table 2]

|  |  | Silicon Nitride Sintered Body | Probe Portion |  |  |  |
| --- | --- | --- | --- | --- | --- | --- |
|  |  |  | Diameter [mm] | Length [mm] | Tip Shape | Surface Roughness Ra [$\mu$m] |
|  | Example 1 | Silicon Nitride Sintered Body 1 | 3 | 1.8 | Curved Surface | 0.5 |
|  | Example 2 | Silicon Nitride Sintered Body 1 | 3 | 1.8 | Flat Surface | 0.5 |

(continued)

| | Silicon Nitride Sintered Body | Probe Portion | | | |
|---|---|---|---|---|---|
| | | Diameter [mm] | Length [mm] | Tip Shape | Surface Roughness Ra [μm] |
| Example 3 | Silicon Nitride Sintered Body 2 | 3 | 1.8 | Curved Surface | 2 |
| Example 4 | Silicon Nitride Sintered Body 2 | 3 | 1.8 | Curved Surface | 15 |
| Example 5 | Silicon Nitride Sintered Body 2 | 5 | 1.8 | Curved Surface | 14 |
| Example 6 | Silicon Nitride Sintered Body 2 | 5 | 1.8 | Curved Surface | 14 |
| Example 7 | Silicon Nitride Sintered Body 2 | 3 | 1.8 | Curved Surface | 0.5 |
| Example 8 | Silicon Nitride Sintered Body 2 | 3 | 1.8 | Curved Surface | 0.5 |
| Example 9 | Silicon Nitride Sintered Body 2 | 5 | 1.8 | Curved Surface | 0.7 |
| Example 10 | Silicon Nitride Sintered Body 2 | 5 | 1.8 | Curved Surface | 0.7 |
| Example 11 | Silicon Nitride Sintered Body 1 | 3 | 1.8 | Curved Surface | 0.5 |
| Comparative Example 1 | Silicon Nitride Sintered Body 1 | 3 | 1.8 | Curved Surface | 0.5 |
| Comparative Example 2 | Silicon Nitride Sintered Body 1 | 3 | 1.8 | Curved Surface | 0.1 |
| Comparative Example 3 | Silicon Nitride Sintered Body 1 | 3 | 1.8 | Curved Surface | 0.5 |

| | Shoulder Portion | | Radius of Curvature of Root Part [mm] |
|---|---|---|---|
| | Diameter [mm] | Radius of Curvature of Outer Edge Part [mm] | |
| Example 1 | 8 | 0.5 | 0.1 |
| Example 2 | 8 | 0.5 | 0.2 |
| Example 3 | 8 | 1.0 | 0.3 |
| Example 4 | 10 | 0.3 | 0.3 |
| Example 5 | 8 | 0.5 | 0.5 |
| Example 6 | 8 | 0.2 | 0.02 |
| Example 7 | 8 | 0.5 | 0.2 |
| Example 8 | 8 | 0.5 | 0.2 |
| Example 9 | 10 | 0.5 | 0.2 |
| Example 10 | 10 | 0.5 | 0.2 |
| Example 11 | 8 | 0.5 | 0.1 |

(continued)

| | Shoulder Portion | | Radius of Curvature of Root Part [mm] |
|---|---|---|---|
| | Diameter [mm] | Radius of Curvature of Outer Edge Part [mm] | |
| Comparative Example 1 | 8 | 0.5 | 0.01 |
| Comparative Example 2 | 8 | 0.5 | 0.2 |
| Comparative Example 3 | 8 | 0.1 | 0.2 |

[Table 3]

| | Presence or Absence of Helical Concavo-Convex Portion | Ridge Part | |
|---|---|---|---|
| | | Differential Rate of Areas of Adjacent Ridge Parts [%] | Difference of Pitches between Adjacent Ridge Parts [mm] |
| Example 1 | Presence | 5 to 20 | 0.01 to 0.05 |
| Example 2 | Presence | 10 to 30 | 0.01 to 0.2 |
| Example 3 | Presence | 5 to 30 | 0.01 to 0.05 |
| Example 4 | Presence | 8 to 15 | 0.01 to 0.05 |
| Example 5 | Presence | 10 to 20 | 0.01 to 0.05 |
| Example 6 | Presence | 7 to 17 | 0.01 to 0.05 |
| Example 7 | Presence | 12 to 20 | 0.01 to 0.05 |
| Example 8 | Presence | 8 to 24 | 0.01 to 0.05 |
| Example 9 | Presence | 9 to 22 | 0.01 to 0.05 |
| Example 10 | Presence | 6 to 27 | 0.01 to 0.05 |
| Example 11 | Presence | 7 to 47 | 0.01 to 0.05 |
| Comparative Example 1 | Absence | - | - |
| Comparative Example 2 | Presence | 1 or less | 0.05 or less |
| Comparative Example 3 | Presence | 20 to 40 | 0.1 to 0.5 |
| | Valley Part | | |
| | Differential Rate of Areas of Adjacent Valley Parts [%] | Difference of depths between Adjacent Valley Parts [mm] | |
| Example 1 | 10 to 20 | 0.01 to 0.1 | |
| Example 2 | 5 to 25 | 0.01 to 0.05 | |
| Example 3 | 8 to 24 | 0.01 to 0.05 | |
| Example 4 | 12 to 30 | 0.01 to 0.05 | |
| Example 5 | 10 to 20 | 0.01 to 0.05 | |
| Example 6 | 15 to 28 | 0.01 to 0.05 | |
| Example 7 | 5 to 30 | 0.01 to 0.05 | |

(continued)

| | Valley Part | |
|---|---|---|
| | Differential Rate of Areas of Adjacent Valley Parts [%] | Difference of depths between Adjacent Valley Parts [mm] |
| Example 8 | 10 to 28 | 0.01 to 0.05 |
| Example 9 | 12 to 28 | 0.01 to 0.05 |
| Example 10 | 8 to 25 | 0.01 to 0.05 |
| Example 11 | 8 to 28 | 0.01 to 0.1 |
| Comparative Example 1 | - | - |
| Comparative Example 2 | 1 or less | 0.05 or less |
| Comparative Example 3 | 35 to 40 | 0.1 to 0.5 |

As can be seen from the tables, in the friction stir welding tool member according to each of the examples, the differential rate of the areas of the ridge parts adjacent along the axis parallel to the rotation axis was within the range of 5% or more and 30% or less.

Next, the friction stir welding tool member according to each of the examples and the comparatives was installed in the friction stir welding apparatus. The friction stir welding method was performed using the friction stir welding apparatus.

As the workpiece, an aluminum plate was prepared. The spot welding was performed on two aluminum plates superimposed on each other. The durability of the friction stir welding tool member was evaluated by the spot welding. The spot welding was performed at the advance angle of zero degrees (by pushing tool member into workpieces in perpendicular direction). The spot welding was performed using a backing material made of the silicon nitride sintered body. Each of the aluminum plates had a thickness of 1 mm. Each of the used aluminum plates had the Vickers hardness Hv of 25.

In a durability test, the spot welding was repeated, and an abrasion amount of the tool member after the spot welding at 50000 points was measured. The abrasion amount was a change amount of a diameter of the concavo-convex portion measured by a vernier caliper between before welding and after welding. The change amount (%) was calculated from an expression of [(diameter before welding - diameter after welding)/diameter before welding] $\times$ 100.

The abrasion amount was measured at every 1000 points. At a time point when 90% of the depth of the valley in the concavo-convex portion was abraded and disappeared, it was determined that the service life of the tool member ended. Table 4 illustrates conditions of the spot welding and evaluation results.

[Table 4]

| | Spot Welding | |
|---|---|---|
| | The Number of Rotations of Welding Tool Member [rpm] | Indentation Load of Welding Tool Member [kN] |
| Example 1 | 3000 | 2.94 |
| Example 2 | 3000 | 2.94 |
| Example 3 | 4000 | 2.94 |
| Example 4 | 3000 | 2.94 |
| Example 5 | 3000 | 2.94 |
| Example 6 | 3000 | 2.94 |
| Example 7 | 3000 | 2.94 |
| Example 8 | 3000 | 2.94 |
| Example 9 | 3000 | 2.94 |

(continued)

| | Spot Welding | |
|---|---|---|
| | The Number of Rotations of Welding Tool Member [rpm] | Indentation Load of Welding Tool Member [kN] |
| Example 10 | 3000 | 2.94 |
| Example 11 | 3000 | 2.94 |
| Comparative Example 1 | 3000 | 2.94 |
| Comparative Example 2 | 3000 | 2.94 |
| Comparative Example 3 | 3000 | 2.94 |
| | Result of Durability Test | Appearance |
| | Abrasion Amount After Spot welding at 50000 Points [%] | |
| Example 1 | Substantially 0 | No Problem |
| Example 2 | 2 | Temperature being abruptly increased in Initial Stage, and after that, No Problem |
| Example 3 | Substantially 0 | No Problem |
| Example 4 | Substantially 0 | No Problem |
| Example 5 | Substantially 0 | No Problem |
| Example 6 | Substantially 0 | Chipping being observed at Probe Portion |
| Example 7 | 1 | No Problem |
| Example 8 | 1 | No Problem |
| Example 9 | 0.5 | No Problem |
| Example 10 | 0.1 | No Problem |
| Example 11 | 1.7 | No Problem |
| Comparative Example 1 | 8 | Appearance Defect (Hollow Cavity being formed in Nugget Portion) |
| Comparative Example 2 | 2.5 | Void-Like Defect existing at Part |
| Comparative Example 3 | 5 | Gap-Like Defect existing, and Chipping being occurred in Shoulder Portion |

As can be seen from Table 4, in the friction stir welding tool member according to each of the examples, the abrasion amount of the concavo-convex portion was substantially 0%. In addition, when the front end of the probe portion had a flat surface as in the example 2, it took time to intrude into the workpieces. Therefore, the temperature was abruptly increased in an initial stage in which the probe portion intruded into the workpieces; however, no problem occurred after the intrusion progressed. If the temperature increase when the probe portion intrudes into the workpieces was large, appearance of the welding mark might be deteriorated. The welding mark was also referred to as a nugget portion in some cases. In a case where the radius of curvature of the root part was small as in the example 6, chipping was observed at the probe portion after the spot welding at 50000 points. In the examples 1 and 3 to 5, abrasion resistance was excellent, and a defect of the nugget portion and an appearance defect were not observed.

The characteristics were excellent even in the case where the helical concavo-convex portion included the valley formed of the plurality of pieces as in the examples 7 to 10. However, since the gaps were provided among the valley parts, the abrasion amount was slightly increased. Therefore, it was found that the helical concavo-convex portion preferably included the valley formed of one piece. In the example 11, when the ridge was out of the preferable range, the abrasion amount was increased.

In any of the comparative examples, the abrasion amount of the concavo-convex portion was large. In the case where the concavo-convex portion was not provided as in the comparative example 1, a hollow cavity was formed in the nugget portion, and an appearance defect was observed. In the comparative example 2, a void-like defect was observed in a part of the nugget portion. In the comparative example 3, a void-like defect was observed in the nugget portion. In addition, in the comparative example 3, chipping occurred in the shoulder portion.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A friction stir welding tool member comprising: a shoulder portion; and a probe portion, wherein

   a helical concavo-convex portion including a ridge and a valley is provided on a side peripheral surface of the probe portion, and
   in a cross-section passing through a rotation axis of the probe portion, a differential rate of areas of valley parts adjacent along an axis parallel to the rotation axis out of the valley is within a range of 5% or more and 30% or less.

2. The friction stir welding tool member according to claim 1, wherein the valley of the helical concavo-convex portion is formed of one continuous piece, or a plurality of discontinuous pieces each having a length less than one circumference of the probe portion.

3. The friction stir welding tool member according to claim 1 or 2, wherein, in the cross-section passing through the rotation axis, a differential rate of areas of ridge parts adjacent along the axis parallel to the rotation axis out of the ridge is within a range of 5% or more and 30% or less.

4. The friction stir welding tool member according to any one of claims 1 to 3, wherein a difference between pitches of ridge parts adjacent along the axis parallel to the rotation axis out of the ridge is within a range of 0.01 mm or more and 0.2 mm or less.

5. The friction stir welding tool member according to any one of claims 1 to 4, wherein a difference between pitches of ridge parts adjacent along the axis parallel to the rotation axis of the ridge is within a range of 0.01 mm or more and 0.1 mm or less.

6. The friction stir welding tool member according to any one of claims 1 to 5, wherein a difference between depths of valley parts adjacent along the axis parallel to the rotation axis out of the valley is within a range of 0.01 mm or more and 0.1 mm or less.

7. The friction stir welding tool member according to any one of claims 1 to 6, wherein the friction stir welding tool member is made of a silicon nitride sintered body.

8. The friction stir welding tool member according to any one of claims 1 to 7, wherein

   a front end surface of the probe portion has a curved surface shape in which a rotation center is a peak, and
   a surface roughness Ra of the front end surface of the probe portion is within a range of 0.2 $\mu$m or more and 15 $\mu$m or less.

9. The friction stir welding tool member according to any one of claims 1 to 8, wherein a root part of the probe portion has a curved surface shape with a radius of curvature of 0.1 mm or more.

10. A friction stir welding apparatus comprising the friction stir welding tool member according to any one of claims 1 to 9.

11. A friction stir welding method performing friction stir welding on workpieces by using the friction stir welding apparatus according to claim 10.

12. The friction stir welding method according to claim 11, wherein spot welding is performed on the workpieces.

**13.** The friction stir welding method according to claim 11 or 12, wherein a material of the workpieces is one kind or two or more kinds selected from iron, an iron alloy, aluminum, an aluminum alloy, copper, a copper alloy, and a fiber-reinforced composite resin.

SIDE VIEW

(A)

TOP VIEW

(B)

FIG. 1

FIG. 2

FIG. 3

FIG. 4

<div align="center">

**INTERNATIONAL SEARCH REPORT**

</div>

| International application No. |
|---|
| **PCT/JP2022/033891** |

**A. CLASSIFICATION OF SUBJECT MATTER**

**B23K 20/12**(2006.01)i
FI: B23K20/12 344

According to International Patent Classification (IPC) or to both national classification and IPC

**B. FIELDS SEARCHED**

Minimum documentation searched (classification system followed by classification symbols)

B23K20/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-25077 A (AISIN KEIKINZOKU CO., LTD.) 28 January 2003 (2003-01-28) paragraphs [0016]-[0025], fig. 1-3 | 1-6 |
| Y | | 7-13 |
| Y | JP 2020-142293 A (OSAKA UNIV.) 10 September 2020 (2020-09-10) paragraphs [0029], [0038] | 7-13 |
| A | | 1-6 |
| Y | US 6676004 B1 (EDISON WELDING INSTITUTE, INC.) 13 January 2004 (2004-01-13) fig. 1 | 9-13 |
| A | | 1-8 |
| A | JP 2015-180514 A (NIPPON LIGHT METAL CO., LTD.) 15 October 2015 (2015-10-15) entire text, all drawings | 1-13 |
| A | JP 2009-61510 A (NIPPON SHARYO SEIZO KAISHA LTD.) 26 March 2009 (2009-03-26) entire text, all drawings | 1-13 |

☐ Further documents are listed in the continuation of Box C.    ☑ See patent family annex.

| \* | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/033891**

| Patent document cited in search report | | | Publication date (day/month/year) | Patent family member(s) | | | Publication date (day/month/year) |
|---|---|---|---|---|---|---|---|
| JP | 2003-25077 | A | 28 January 2003 | (Family: none) | | | |
| JP | 2020-142293 | A | 10 September 2020 | US 2022/0001486 A1 paragraphs [0050], [0061] CN 113365772 A | | | |
| US | 6676004 | B1 | 13 January 2004 | (Family: none) | | | |
| JP | 2015-180514 | A | 15 October 2015 | (Family: none) | | | |
| JP | 2009-61510 | A | 26 March 2009 | (Family: none) | | | |

Form PCT/ISA/210 (patent family annex) (January 2015)

**REFERENCES CITED IN THE DESCRIPTION**

**Patent documents cited in the description**

- WO 2016047376 A

- JP 2003025077 A